# DEMANDE DE BREVET EUROPEEN

(11) **EP 1 827 019 A1**
(43) Date de publication de la demande: **29.08.2007**
(21) Numéro de dépôt: 06110338.8
(22) Date de dépôt: 23.02.2006
(51) Int. Cl.: H04N 7/16

(54) **Procédé de contrôle d'accès à des données à accès conditionnel**

(71) Demandeur: Nagravision S.A., 1033 Cheseaux-sur-Lausanne (CH)
(72) Inventeur: Kudelski, Henri, 1091 Grandvaux (CH); Conus, Joël, 1040 Echallens (CH)
(74) Mandataire: Nithardt, Joel

(57) **Abrégé**

La présente invention concerne un procédé de contrôle d'accès à des données à accès conditionnel dans lequel des données sont diffusées sous forme chiffrée à destination d'un moins une unité multimédia, le déchiffrement desdites données étant conditionné à des droits stockés dans l'unité multimédia. Ce procédé est caractérisé en ce que lesdits droits sont envoyés à ladite unité multimédia sous forme d'une pluralité de messages d'autorisation chiffrés au moins au moyen d'une clé de synchronisation (SK) et en ce que cette clé de synchronisation est diffusée à destination des unités multimédia concernées.

## Description

### DOMAINE TECHNIQUE

La présente invention concerne le domaine de l'accès à des données à accès conditionnel, notamment dans le cadre de la télévision à péage. De façon plus précise, elle concerne un procédé de contrôle d'accès à des données à accès conditionnel dans lequel des données sont diffusées sous forme chiffrée à destination d'un moins une unité multimédia, le déchiffrement desdites données étant conditionné à des droits stockés dans l'unité multimédia.

### TECHNIQUE ANTERIEURE

De façon bien connue, pour pouvoir accéder à des données chiffrées telles que des informations, des logiciels, des jeux, ou pour visionner un événement de télévision à péage, tel qu'un film, un événement sportif ou un jeu notamment, plusieurs flux sont diffusés à destination d'un ensemble d'unités multimédia formées d'un décodeur et d'un module de sécurité. Ces flux sont notamment d'une part le fichier de l'événement sous forme d'un flux de données chiffrées et d'autre part, un flux de messages de contrôle ECM permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé notamment de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle cw est obtenu en déchiffrant les messages de contrôle ECM au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans le module de sécurité associé au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Lors du déchiffrement d'un message de contrôle ECM, il est vérifié, dans le module de sécurité, que le droit pour accéder au contenu considéré est présent. Ce droit peut être géré par des messages d'autorisation EMM (Entitlement Management Message) qui chargent un tel droit dans le module de sécurité.

La diffusion de données numériques à accès conditionnel est schématiquement divisée en trois modules. Le premier module est en charge du chiffrement des données numériques par les mots de contrôle cw et de la diffusion de ces données.

Le deuxième module prépare les messages de contrôle ECM contenant les mots de contrôle cw, ainsi que les conditions d'accès et les diffuse à l'intention des utilisateurs.

Le troisième module quant à lui prépare et transmet les messages d'autorisation EMM qui sont en charge de définir les droits de réception dans les modules de sécurité connectés aux récepteurs.

Alors que les deux premiers modules sont généralement indépendants des destinataires, le troisième module gère l'ensemble des utilisateurs et diffuse des informations à l'intention d'un utilisateur, d'un groupe d'utilisateurs ou de tous les utilisateurs.

Afin de s'assurer que tous les utilisateurs concernés, ou au moins la grande majorité d'entre eux ont reçu les messages d'autorisation EMM qui leur sont destinés, ces messages sont généralement répétés de nombreuses fois à l'identique. Ces messages peuvent être répétés de façon cyclique selon une fréquence prédéfinie et pendant une durée dépendant de l'importance du message notamment.

Du fait de la répétition des messages, une personne mal intentionnée peut, par l'analyse de plusieurs messages, obtenir des informations qu'elle pourra exploiter pour tenter de prendre en défaut la sécurité du système. En particulier, en analysant le nombre de messages reçus entre deux messages identiques, il sera possible de déduire le nombre de messages contenus dans un cycle. La personne mal intentionnée pourra donc savoir quelle quantité de messages elle doit analyser et quels sont les messages qu'il n'est pas nécessaire d'analyser.

De plus, dans certains systèmes actuels, il est possible de renvoyer à plusieurs reprises, un même message à une unité multimédia. Le traitement de ce même message plusieurs fois permettra également de déduire des informations utiles pour une personne cherchant à casser la sécurité du système.

La présente invention se propose de pallier les inconvénients des procédés de l'art antérieur en réalisant un procédé dans lequel il n'est pas possible d'obtenir des informations concernant le fonctionnement du système à partir de l'analyse des messages d'autorisation reçus par une unité multimédia.

### EXPOSE DE L'INVENTION

Le but de l'invention est atteint par un procédé de contrôle d'accès à des données à accès conditionnel dans lequel des données sont diffusées sous forme chiffrée à destination d'au moins une unité multimédia, le déchiffrement desdites données étant conditionné à des droits stockés dans l'unité multimédia, caractérisé en ce que lesdits droits sont envoyés à ladite unité multimédia sous forme d'une pluralité de messages d'autorisation chiffrés au moins au moyen d'une clé de synchronisation et en ce que cette clé de synchronisation est diffusée à destination des unités multimédia concernées.

Grâce au procédé de l'invention, les messages reçus par une unité multimédia ne présenteront plus de périodicité, même si les messages émis sont répétés périodiquement. De cette manière, une personne mal intentionnée ne pourra pas déterminer s'il existe une périodicité et par conséquent quelle en est sa valeur. Ainsi, elle ne pourra pas limiter son attaque à un nombre restreint de messages.

Selon le procédé de l'invention, un message déjà utilisé ne pourra pas être réutilisé pour être renvoyé à une unité multimédia. Ceci empêche également de déduire des informations en envoyant plusieurs fois un même message et en analysant le résultat du traitement de ce message.

De plus, dans le procédé de l'invention, une couche supplémentaire de chiffrement est ajoutée aux couches de chiffrement existantes. Il en résulte donc une sécurité accrue du système.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 illustre un premier mode de réalisation d'envoi de messages selon le procédé de la présente invention;
- les figures 2 et 3 illustrent deux variantes de messages utilisés dans le procédé de l'invention; et
- la figure 4 représente schématiquement le déchiffrement de messages tels qu'illustrés par la figure 2.

### MANIERES DE REALISER L'INVENTION

Généralement, comme indiqué précédemment, l'accès aux données à accès conditionnel est soumis à l'obtention de droits d'accès. Ceux-ci sont transmis aux unités multimédia sous la forme de messages d'autorisation EMM. Afin de s'assurer que tous les utilisateurs ou pratiquement tous ont bien reçu les messages qui les concernent, ceux-ci sont répétés, généralement de nombreuses fois, de façon cyclique.

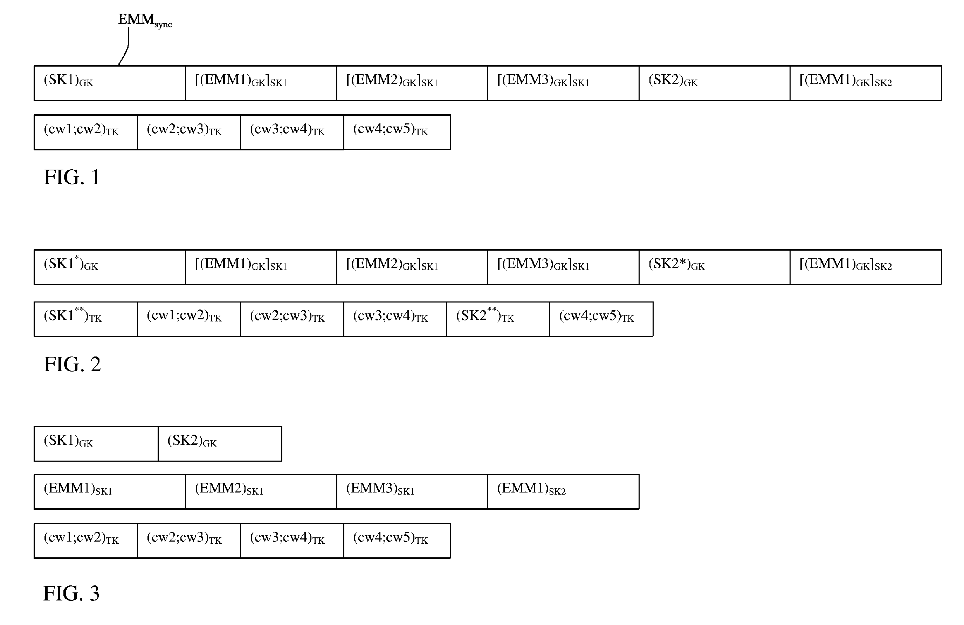

Dans les modes de réalisation illustrés par les figures 1 à 3, les messages d'autorisation EMM sont chiffrés au moyen d'une clé dite clé d'autorisation GK mémorisée dans les unités multimédia. Selon l'invention, l'accès à ces messages d'autorisation nécessite en outre une clé dite clé de synchronisation SK. II est à noter qu'en fonction du type de message d'autorisation, global, de groupe ou individuel, la clé d'autorisation peut être commune à toutes les unités multimédia associées à un centre de gestion, à un groupe d'unités multimédia ou à une seule.

Dans l'un des modes de réalisation possibles, illustré en particulier par la figure 1, cette clé de synchronisation est envoyée dans un message d'autorisation EMM_{sync}, dénommé message de synchronisation.

De façon plus détaillée, la figure 1 illustre, dans sa partie supérieure, un flux de messages d'autorisation tel qu'utilisé dans la présente invention, et dans sa partie inférieure, un flux de messages de contrôle ECM conventionnels. Le flux de messages d'autorisation comprend trois messages, notés EMM1, EMM2 et EMM3, qui sont répétés de façon cyclique.

Le procédé de l'invention tel qu'illustré par cette figure 1 fonctionne de la manière suivante. Une première clé de synchronisation SK1 est choisie dans un centre de gestion. Cette clé de synchronisation est chiffrée au moyen d'une clé de chiffrement commune aux unités multimédia qui sont susceptibles d'être concernés, c'est-à-dire toutes les unités multimédia liées à un abonnement, un canal, un bouquet, un centre de diffusion ou un centre de gestion déterminés, ou celles ayant acquis un droit particulier. La clé commune peut être la clé d'autorisation GK mentionnée précédemment. La clé de synchronisation chiffrée par la clé d'autorisation est traitée de façon à former un message de même type que les messages d'autorisation EMM conventionnels.

Selon le mode de réalisation illustré par la figure 1, chaque message d'autorisation EMM1, EMM2 et EMM3 est chiffré de façon conventionnelle avec la clé d'autorisation GK. La première clé de synchronisation est ensuite utilisée pour surchiffrer les messages d'autorisation EMM1, EMM2, EMM3 préalablement chiffrés avec la clé d'autorisation.

Le procédé recommence au cycle suivant d'envoi des messages d'autorisation EMM en choisissant une deuxième clé de synchronisation SK2, puis en surchiffrant les messages d'autorisation EMM1, EMM2 et EMM3, préalablement chiffrés avec la clé d'autorisation, au moyen de cette deuxième clé de synchronisation. On procède de même pour chaque cycle de message d'autorisation.

On forme ensuite un flux de messages d'autorisation en plaçant au début de chaque cycle, la clé de synchronisation, suivie des messages d'autorisation EMM surchiffrés avec cette clé de synchronisation.

Comme la clé de synchronisation est modifiée dans chaque message de synchronisation, un même message d'autorisation initial aboutira à un message différent au cours de chaque cycle. Ainsi, une personne interceptant les messages d'autorisation en vue de les analyser ne pourra pas en déduire des informations relatives à la périodicité, au nombre de messages différents par cycle ou d'autres informations qui pourraient être utilisées en vue de mettre en péril la sécurité du système.

Les messages de contrôle ECM, représentés schématiquement dans la partie inférieure de la figure 1, sont transmis de façon conventionnelle.

Dans la description ci-dessus, il est indiqué que les messages de synchronisation EMM_{sync} sont envoyés au début de chaque cycle d'envoi de message d'autorisation EMM. Selon une variante, les messages de synchronisation peuvent être envoyés non pas au début du cycle, mais à n'importe quel moment de celui-ci. Dans ce cas, comme il est nécessaire de disposer de la clé de synchronisation SK pour pouvoir accéder aux messages d'autorisation EMM, ces messages peuvent être mémorisés dans l'attente de recevoir le message de synchronisation correspondant et d'en avoir extrait la clé de synchronisation. Une fois cette clé de synchronisation disponible, les messages d'autorisation peuvent être extraits de la mémoire et déchiffrés. La suite du procédé se déroule alors comme indiqué précédemment.

Selon une autre variante, les messages d'autorisation ne sont pas envoyés de façon cyclique, ou seule une partie d'entre eux l'est. Dans ce cas, la clé de synchronisation n'est pas modifiée au début de chaque cycle, mais peut être modifiée à n'importe quel moment. La clé pourrait être modifiée par exemple pour chaque message d'autorisation EMM, après un nombre prédéfini de messages, après un certain temps ou selon tout autre critère. Il est possible de prévoir une information pour indiquer le changement de clé de synchronisation, de façon que la bonne clé soit utilisée en fonction des messages reçus. Selon une variante, chaque clé de synchronisation SK reçue par l'unité multimédia invalide la clé de synchronisation précédente. L'ordre des messages de changement de clé de synchronisation doit bien entendu être respecté par rapport aux messages d'autorisation EMM.

Dans l'exemple décrit en référence à la figure 1, les messages d'autorisation EMM sont d'abord chiffrés avec la clé d'autorisation GK avant d'être chiffrés avec la clé de synchronisation SK. II est toutefois également possible d'inverser l'ordre de chiffrement, c'est-à-dire chiffrer les messages d'autorisation tout d'abord avec la clé de synchronisation SK, puis avec la clé d'autorisation GK. Une autre possibilité consiste à chiffrer les messages d'autorisation uniquement avec la clé de synchronisation SK, sans utiliser la clé d'autorisation GK.

Il est à noter qu'il est possible d'avoir des messages d'autorisation envoyés de façon cyclique et de changer les clés de synchronisation de façon non cyclique ou selon un cycle asynchrone.

La figure 2 illustre un mode de réalisation dans lequel la clé de synchronisation n'est pas entièrement contenue dans un message de synchronisation, mais doit être formée à partir de plusieurs messages.

Dans ce cas, une première partie de clé de synchronisation, notée SK1* est choisie dans le centre de gestion. Cette première partie est chiffrée au moyen de la clé d'autorisation GK et est formatée comme précédemment de façon à former un message de type message d'autorisation EMM.

Une deuxième partie de clé de synchronisation, notée SK1** est également choisie dans le centre de gestion. Cette deuxième partie est chiffrée au moyen de la clé de transmission TK, utilisée pour le chiffrement des messages de contrôle ECM. Le résultat est à son tour formaté de façon à former un message de type message de contrôle ECM.

La clé de synchronisation SK est formée par l'association des deux parties de clé de synchronisation. Cette association peut se faire par concaténation, au moyen d'une fonction mathématique tel qu'un OU exclusif par exemple, par chiffrement d'une partie de la clé par l'autre partie ou par tout autre moyen similaire.

Les flux des messages d'autorisation EMM et de contrôle ECM sont envoyés de façon conventionnelle. Il est toutefois nécessaire de disposer des deux flux pour en extraire les deux parties de clés de synchronisation et ainsi de pouvoir accéder aux messages d'autorisation EMM. Ces flux doivent toutefois être synchronisés pour pouvoir générer la clé de synchronisation SK correcte.

Dans le mode de réalisation illustré par la figure 2, la clé de synchronisation est formée de deux parties, chaque partie étant dans un message de type différent. Selon une variante, il est possible de former la clé à partir d'un plus grand nombre de parties. De plus, les parties pourraient toutes être dans le même type de message ou dans des messages de types différents, ces types n'étant pas limités aux messages d'autorisation EMM et de contrôle ECM. En effet, des messages de service SI ou tout autre type imaginable pourrait convenir. II est même envisageable de créer un format particulier pour l'envoi de la clé de synchronisation. L'essentiel est bien entendu que le récepteur soit en mesure de traiter les messages reçus et d'en extraire les éléments permettant de générer la clé de synchronisation.

Selon une autre variante de la figure 2, il est possible de prévoir différents flux de messages de contrôle ECM, dans lesquels chaque flux est associé à un ensemble de clés de synchronisation particulières et dans lequel chaque flux correspond par exemple à un service différent.

Dans ce cas, il est possible d'envoyer des messages d'autorisation spécifiques à ces services, ceci en plus de l'adressage conventionnel des messages d'autorisation.

La figure 3 illustre un cas particulier dans lequel les clés de synchronisation sont envoyés dans un flux de messages spécifique, différent des messages d'autorisation EMM et de contrôle ECM. Dans le mode de réalisation illustré par la figure 3, les messages d'autorisation EMM1, EMM2 et EMM3 sont chiffrés uniquement par la clé de synchronisation, sans chiffrement préalable par la clé d'autorisation. Selon une variante, ils pourraient toutefois également être chiffrés préalablement ou postérieurement par la clé d'autorisation GK.

Comme cela est illustré par cette figure, les clés de synchronisation sont chiffrées au moyen de la clé d'autorisation. Dans ce cas, il est nécessaire de déchiffrer d'abord un message de synchronisation avant de pouvoir accéder aux messages d'autorisation correspondants.

Selon une variante non-illustrée, il est également possible de chiffrer non-pas les messages d'autorisation EMM au moyen des clés de synchronisation, mais les messages de contrôle ECM. Ces messages de contrôle pourraient être également chiffrés, en plus du chiffrement par les clés de synchronisation, par la clé de transmission TK, l'ordre de chiffrement, en cas d'utilisation des clés de synchronisation et de transmission pouvant être choisi dans le système. Ces messages de contrôle pourraient être chiffrés uniquement par les clés de synchronisation, sans utilisation de la clé de transmission. Il est à noter que d'autres types de messages que les messages de contrôle ECM ou les messages d'autorisation EMM pourraient également être utilisés.

Selon une variante de l'invention, la clé de synchronisation peut ne pas être contenue en tant que telle dans le message de synchronisation EMM_{sync}. Ce message contient par contre des éléments permettant de déterminer cette clé.

Une manière de mettre en oeuvre cette variante consiste par exemple à former le message de synchronisation avec une information temporelle et une clé provisoire. La clé de synchronisation peut être formée dans ce cas par une fonction de hachage à clé utilisant l'information temporelle comme entrée et la clé provisoire comme clé de hachage. Cette manière de faire est intéressante du fait qu'elle contient une information temporelle qui peut être utilisée dans l'unité multimédia pour se mettre à l'heure en permanence et contrôler la validité d'un message reçu. En effet, cette information temporelle permet de filtrer des messages qui ont déjà été reçus et d'éviter qu'une personne mal intentionnée renvoie plusieurs fois les mêmes messages dans le but d'accéder à des données sans autorisation ou d'en déduire des informations permettant une meilleure compréhension des mécanismes du système.

Cette fonction connue sous l'appellation "anti-replay", permettant d'empêcher le renvoi de messages ayant déjà été utilisés, peut se faire sur la base d'une information temporelle, c'est-à-dire notamment une date et/ou une heure comme indiqué ci-dessus ou sur la base d'un compteur par exemple. Dans ce cas, les messages contiennent une valeur qui est mémorisée lorsque le message a été déchiffré. Si un message ultérieur contient la même valeur, ce message est considéré comme un ancien message déjà utilisé. Le message peut être simplement éliminé ou des contre-mesures peuvent être prises, allant jusqu'à l'interdiction d'accéder au contenu. Il est clair que, pour la gestion de cette fonction, l'unité multimédia doit être en mesure de gérer les informations temporelles ou le compteur de façon à empêcher le "retour en arrière" de cette information temporelle.

L'information temporelle décrite ci-dessus pourrait être utile dans le cas où un message de synchronisation contenant une clé de synchronisation spécifique est envoyé plusieurs fois. Cet envoi répété peut être utile voire nécessaire pour garantir une bonne qualité du service. Dans ce cas, il pourrait être intéressant de chiffrer les messages de synchronisation, avant chaque transmission, au moyen de l'information temporelle pour qu'il ne soit pas possible d'extraire ces messages de synchronisation du flux reçu. Cette variante présente en outre l'avantage de diminuer le nombre de clés de synchronisation à générer, la génération de ces clés pouvant être coûteuse en temps et/ou en ressources.

La présente invention couvre les variantes indépendamment les unes des autres, comme décrit ci-dessus, mais couvre également les combinaisons de ces variantes. A titre d'exemple, il est possible d'envoyer les éléments permettant de former la clé de synchronisation dans plusieurs messages distincts, ces messages étant de type différent. Par exemple, la clé de synchronisation peut être formée à partir d'une date contenue dans un message d'autorisation EMM et d'une clé provisoire contenue dans un message de service SI et d'une information supplémentaire contenue dans un message de contrôle ECM. Dans ce cas, il sera nécessaire d'obtenir chacune des trois informations pour avoir accès aux messages d'autorisation EMM.

Selon une variante de l'invention, il est possible d'utiliser non pas une seule clé de synchronisation, mais plusieurs. Selon un mode de réalisation particulier, les messages d'autorisation EMM sont chiffrés par plus d'une clé de synchronisation, par exemple deux clés. Dans ce cas, il est nécessaire de disposer de toutes les clés de synchronisation pour accéder à un contenu chiffré. Ces clés de synchronisation peuvent avoir une périodicité différente et totalement indépendantes les unes des autres.

Dans la description ci-dessus, il n'est pas précisé si la ou les clés de synchronisation sont de type symétrique ou non. En fait, il est possible d'utiliser aussi bien une clé symétrique qu'une clé asymétrique.

Dans le mode de réalisation décrit ci-dessus, dans lequel plusieurs clés sont utilisées pour chiffrer le même message d'autorisation EMM, il est possible d'utiliser une clé symétrique et une clé asymétrique, ces clés pouvant être changées selon des périodicités différentes.

Selon une variante de l'invention, la clé de synchronisation est indispensable pour filtrer les messages d'autorisation EMM.

De façon bien connue, certains messages d'autorisation contiennent des identifiants ou des plages d'identifiants correspondant aux unités multimédia auxquelles les messages sont destinés. Dans la présente variante de l'invention, ces identifiants ne sont pas intégrés en clair dans les messages d'autorisation EMM, mais sont chiffrés au moyen de la clé de synchronisation.

Ces identifiants, ou plages d'identifiants, sont reconstruits par l'unité multimédia, soit par le décodeur, soit par le module de sécurité. De façon plus détaillée, l'identifiant de filtrage peut être reconstruit par le décodeur lui-même qui filtre ensuite les messages. Il peut également être reconstruit par le module de sécurité qui le transmet ensuite au décodeur pour filtrer ces messages. Une combinaison des deux variantes ci-dessus est également envisageable.

Si l'identifiant de l'unité multimédia correspond à un identifiant contenu dans le message d'autorisation, celui-ci est traité de façon conventionnelle. Au contraire, si cet identifiant ne correspond pas, un filtre bloque ou élimine le message. Ce filtre peut être situé dans le décodeur ou dans le module de sécurité.

Lorsqu'une unité multimédia ne dispose pas de la clé de synchronisation, le filtre élimine le message de sorte que l'unité multimédia ne peut pas acquérir un nouveau droit sans clé de synchronisation.

Il est à noter que dans les exemples illustrés par les figures, les clés de synchronisation sont chiffrées par des clés liées aux messages de contrôle ECM ou aux messages d'autorisation EMM. Il est généralement possible d'utiliser des clés totalement indépendantes, pour autant qu'elles soient connues ou qu'elles puissent être déterminées par l'unité multimédia qui est en charge du déchiffrement des messages contenant ces lés de synchronisation.

Il est également à noter que ces clés servant à chiffrer les messages de synchronisation ne sont pas nécessairement globales, mais peuvent être individuelles ou partagées, selon des critères tels que des services, des groupes d'identifiants ou autres.

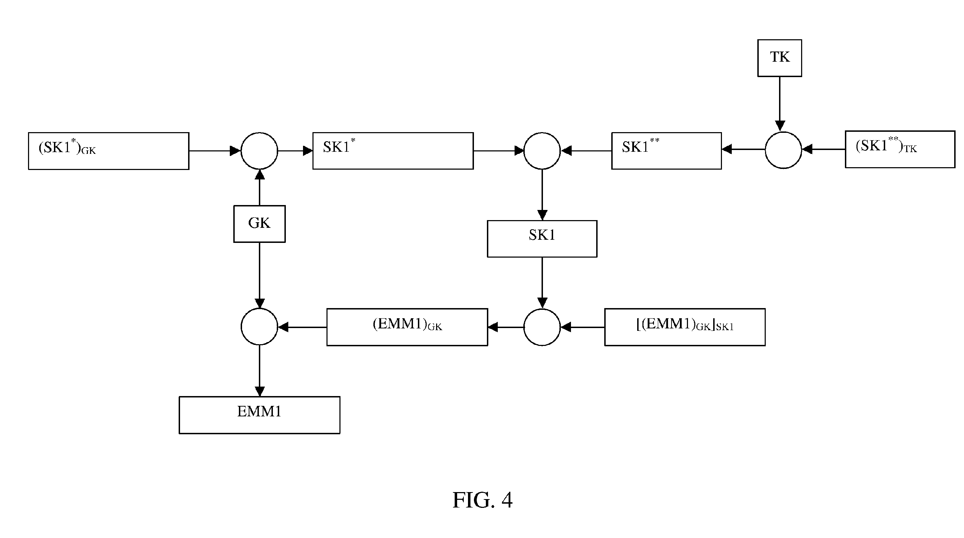

La figure 4 illustre de façon schématique, le déchiffrement des messages d'autorisation EMM dans le cas de l'envoi de messages tels qu'illustrés par la figure 2.

L'unité multimédia reçoit le flux de messages d'autorisation EMM et le flux de messages de contrôle ECM. A partir du flux de messages d'autorisation, il peut extraire le message de synchronisation EMM_{sync} qui correspond à la première partie SK1* de la clé de synchronisation, chiffrée avec la clé d'autorisation GK. Comme cette unité multimédia dispose de la clé d'autorisation, elle peut déterminer la première partie de la clé de synchronisation SK1 *.

A partir du flux de messages de contrôle, l'unité multimédia peut extraire le message contenant la deuxième partie de la clé de synchronisation SK1** chiffrée par la clé de transmission TK. Comme l'unité multimédia dispose également de la clé de transmission TK, elle est en mesure de déterminer la deuxième partie de la clé de synchronisation SK1**. A partir de ces deux parties, en appliquant l'opération requise, l'unité multimédia peut former la clé de synchronisation SK1.

Les messages d'autorisation reçus par l'unité multimédia sont ensuite déchiffrés en utilisant cette clé de synchronisation SK1. Ces messages d'autorisation peuvent donc être obtenus en clair. Ceux-ci sont ensuite utilisés de façon conventionnelle.

La même procédure se déroule avec une deuxième clé de synchronisation lors du cycle suivant. Le déchiffrement peut être réalisé dans le décodeur ou dans le module de sécurité associé à ce décodeur.

La présente invention offre ainsi une sécurité accrue par rapport aux systèmes de l'art antérieur et cache des informations qui pourraient être utiles à des personnes mal intentionnées.

## Revendications

1. Procédé de contrôle d'accès à des données à accès conditionnel dans lequel des données sont diffusées sous forme chiffrée à destination d'un moins une unité multimédia, le déchiffrement desdites données étant conditionné à des droits stockés dans l'unité multimédia, **caractérisé en ce que** lesdits droits sont envoyés à ladite unité multimédia sous forme d'une pluralité de messages d'autorisation chiffrés au moins au moyen d'une clé de synchronisation (SK) et **en ce que** cette clé de synchronisation est diffusée à destination des unités multimédia concernées.

2. Procédé de contrôle d'accès selon la revendication 1, **caractérisé en ce que** les messages d'autorisation sont répétés de façon cyclique.

3. Procédé de contrôle d'accès selon la revendication 2, **caractérisé en ce que** la clé de synchronisation est modifiée au moins lors de chaque cycle.

4. Procédé de contrôle d'accès selon la revendication 2, **caractérisé en ce que** la clé de synchronisation est envoyée au début d'un cycle.

5. Procédé de contrôle d'accès selon l'une quelconque des revendications 1 à 4, **caractérisé en ce que** les messages d'autorisation (EMM) sont chiffrés uniquement avec ladite clé de synchronisation.

6. Procédé de contrôle d'accès selon la revendication 1, **caractérisé en ce que** les messages d'autorisation (EMM) sont chiffrés d'une part avec une clé dite d'autorisation et d'autre part avec ladite clé de synchronisation.

7. Procédé de contrôle d'accès selon la revendication 6, **caractérisé en ce que** le chiffrement des messages d'autorisation est effectué en premier lieu au moyen de ladite clé d'autorisation et en second lieu au moyen de ladite clé de synchronisation.

8. Procédé de contrôle d'accès selon la revendication 6, **caractérisé en ce que** le chiffrement des messages d'autorisation est effectué en premier lieu au moyen de ladite clé de synchronisation et en second lieu au moyen de ladite clé d'autorisation.

9. Procédé de contrôle d'accès selon la revendication 1, **caractérisé en ce que** ladite clé de synchronisation est modifiée après chiffrement d'un nombre déterminé de messages d'autorisation.

10. Procédé de contrôle d'accès selon la revendication 1, **caractérisé en ce que** ladite clé de synchronisation est modifiée après une durée d'utilisation déterminée.

11. Procédé de contrôle d'accès selon la revendication 1, **caractérisé en ce que** ladite clé de synchronisation est formée de plusieurs parties de clé de synchronisation et **en ce que** lesdites parties de clé sont transmises aux unités multimédia concernées dans plusieurs messages distincts.

12. Procédé de contrôle d'accès selon la revendication 11, **caractérisé en ce que** lesdits messages distincts contenant une partie de la clé de synchronisation sont d'au moins deux types différents.

13. Procédé de contrôle d'accès selon la revendication 1, **caractérisé en ce que** ledit message de synchronisation contient une information temporelle.

14. Procédé de contrôle d'accès selon la revendication 1, **caractérisé en ce que** ledit message de synchronisation contient une valeur unique distincte pour deux messages distincts.

15. Procédé de contrôle d'accès selon la revendication 1, **caractérisé en ce qu'**au moins deux clés de synchronisation sont utilisées simultanément.

16. Procédé de contrôle d'accès selon la revendication 15, **caractérisé en ce que** les clés de synchronisation ont une durée de validité différente.

17. Procédé de contrôle d'accès selon la revendication 1, dans lequel ladite au moins une unité multimédia contient un identifiant et dans lequel au moins un message diffusé contient au moins un identifiant servant à indiquer à quelle unité multimédia ce message est destiné, **caractérisé en ce que** ledit identifiant contenu dans le message est chiffré par la clé de synchronisation (SK).
